Europäisches Patentamt

European Patent Office

Office européen des brevets

(19)

(11) Veröffentlichungsnummer: **0 318 783 B1**

(12) # EUROPÄISCHE PATENTSCHRIFT

(45) Veröffentlichungstag der Patentschrift:
29.05.91 Patentblatt 91/22

(51) Int. Cl.$^5$: **C09C 1/36, C09C 1/00**

(21) Anmeldenummer: 88119294.2

(22) Anmeldetag: 21.11.88

(54) **Rutilmischphasenpigmente mit verbesserter Koloristik.**

(30) Priorität: 01.12.87 DE 3740635

(43) Veröffentlichungstag der Anmeldung:
07.06.89 Patentblatt 89/23

(45) Bekanntmachung des Hinweises auf die
Patenterteilung:
29.05.91 Patentblatt 91/22

(84) Benannte Vertragsstaaten:
DE ES GB IT NL

(56) Entgegenhaltungen:
EP-A- 0 233 601
DE-A- 1 417 243
DE-A- 1 417 246

(56) Entgegenhaltungen:
GB-A- 878 421
US-A- 1 945 809
CHEMICAL ABSTRACTS, Band 104, Nr. 22, 2.
Juni 1986, Seite 99, Zusammenfassung nr.
188267k, Columbus, Ohio, US; & SU-A-1 198
085 ("PIGMENT" SCIENTIFIC-INDUSTRIAL
ENTERPRISES, LENINGRAD) 15-12-1985

(73) Patentinhaber: BAYER AG
W-5090 Leverkusen 1 Bayerwerk (DE)

(72) Erfinder: Wilhelm, Volker, Dr.
Fichtenweg 1
W-5060 Bergisch-Gladbach 2 (DE)
Erfinder: Mansmann, Manfred, Dr.
Oskar-Schlemmer-Strasse 2
W-5090 Leverkusen 1 (DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Chrom-Antimon-Rutilmischphasenpigmente mit verbesserter Koloristik, Verfahren zu ihrer Herstellung sowie deren Verwendung.

Mischphasenpigmente mit Rutilstruktur sind lange bekannt. Durch Einbau von Metalloxiden, wie z.B. NiO, $Cr_2O_3$, CuO, MnO mit $Sb_2O_5$, $Nb_2O_5$, $WO_3$ in das Kristallgitter des Titandioxids kann man Mischoxide mit Rutilstruktur herstellen, deren Farbtöne sich über weite Bereiche des sichtbaren Spektrums erstrecken.

Weicht die Wertigkeit des eingebauten farbgebenden Metallions von 4 ab, so wird zum Valenzausgleich ein weiteres Metalloxid mit anderer Wertigkeit in das Rutilgitter eingebaut, so daß die eingebauten Metalloxide im Gitter folgender Bedingung genügen :

$$aA^{n+}O_{\frac{n}{2}} + bB^{m+}O_{\frac{m}{2}} = (a + b) (A_{\frac{a}{a+b}} B_{\frac{b}{a+b}})O_2$$

Daraus folgt für a und b :

a.n + b.m = 4 (a + b)

Dabei bedeuten :

A : ein einbaufähiges Metall, z.B. $Cr^{3+}$, $Ni^{2+}$, $Cu^{2+}$, $Mn^{3+}$

B : ein einbaufähiges Metall, z.B. $Sb^{5+}$, $Nb^{5+}$, $W^{6+}$

O : Sauerstoffatom

n : Wertigkeit des eingebauten Metall A, wobei n = 2,3

m : Wertigkeit des eingebauten Metall B, wobei m = 5,6

a,b : kleine, ganze Zahlen

In der Regel werden diese Verhältnisse weitgehend eingehalten, es sind aber auch Rutilmischphasenpigmente bekannt, bei denen eine stärkere Abweichung von dieser idealisierten Zusammensetzung vorkommt.

Größere technische Bedeutung haben die Nickel- und Chrom-Rutilmischphasenpigmente erlangt. Beim Einbau von Nickeloxid und Chromoxid als farbgebende Oxide in $TiO_2$ werden zum Wertigkeitsausgleich höherwertige Metalloxide, besonders von Antimon, aber auch von Niob und/oder Wolfram eingebaut (US-A-1 945 809, US-A-2 251 829, US-A-2 257 278, US-A-3 832 205).

Die Herstellung solcher Pigmente wird durch Glühung bei Temperaturen von etwa 900 bis etwa 1200°C von Anatas und/oder Hydraten des Titandioxides mit einbaufähigen Metalloxiden oder diese liefernde Verbindungen und anschließendem Mahlen bewirkt (US-A-3 022 186, Ullmanns Encyklopädie der technischen Chemie, 4. Aufl., Bd. 18 (1979), Seite 608-609).

Die Rutilmischphasenpigmente weisen ein hohes Maß an Licht-, Wetter-, Säure- und Alkalibeständigkeit sowie Resistenz gegen andere Chemikalien auf und besitzen gleichzeitig eine Temperaturstabilität bis ca. 1000°C. Nähere Einzelheiten können dem "Lehrbuch der Lacke und Beschichtungen, Band II, Pigmente, Füllstoffe, Farbstoffe", Herausgeber : Dr. Hans Kittel, erschienen 1974 im Verlag W.A. Colomb in der W. Heinemann GmbH, Berlin-Oberschwandorf, Seite 92-95 entnommen werden.

Die hervorragende Farbtonbeständigkeit – Licht – und Wetterbeständigkeit auch in starken Aufhellungen – bei der Bewitterung von Lacken beispielsweise auf Basis von Alkyd-Melaminharzen oder Siliconpolyestern prädestinieren diese Pigmente zur Pigmentierung von Einbrenn- oder Coil-Coat-Lacken.

Aber auch die Pigmentierung von Kunststoffen mit Rutilmischphasenpigmente gewinnt in zunehmendem Maße an Bedeutung.

Die größte wirtschaftliche Bedeutung haben bislang Chrom(III)oxidhaltige Rutilmischphasenpigmente erlangt, die insbesondere Antimonoxid, aber auch Niob- und/oder Wolframoxid als höherwertige Metalloxide eingebaut enthalten.

Ziel verschiedener Schutzrechtsbegehren für solche Chrom(III)oxidhaltigen Rutilmischphasenpigmente sind Herstellungsverfahren, die Pigmente mit verbesserten Farbeigenschaften, wie z.B. Farbreinheit, Sättigung, Farbstärke, Deckvermögen, liefern. So können vor der Kalzinierung der Rohstoffmischung gesondert hergestellte Rutilkeime die Farbreinheit erhöhen (DE-A-2 605 651). In der USSR-Patentanmeldung SU-A 1 198 085 werden Chrom-Antimon-Rutilmischphasenpigmente in ihrem Deckvermögen und ihrer Farbintensität dadurch verbessert, daß vor der Kalzinierung der Rohstoffmischung 2-10% nichtfarbgebende Chloride der I. und II. Gruppe des Periodensystems zugesetzt werden.

Die bekannten Mineralisatoren für Rutilmischphasenpigmente, wie sie beispielsweise in der US-A-3 022 186 – Lithiumfluorid oder Natriumfluorid sind als Substanzen gleichwertig genannt – angegeben sind, dienen bekanntlich dazu, Festkörperreaktion durch Anwesenheit einer fluiden Phase zu erleichtern. So kann durch die Anwesenheit eines Mineralisators die Dauer einer Festkörperreaktion herabgesetzt, die notwendige Temperatur vermindert, oder auch die Vollständigkeit der Reaktion erhöht werden. In ähnlicher Weise muß auch der Zusatz von Alkali- und Erdalkalichloriden gemäß SU-A 1 198 085 verstanden werden.

Chrom-Antimon-Rutilmischphasenpigmente weisen eine unerwünschte Abschreckempfindlichkeit – d.h. eine Empfindlichkeit gegenüber schnellem Abkühlen – auf, was zu einem Absinken der Farbreinheit führen kann. Diese Abschreckempfindlichkeit ist besonders ausgeprägt bei dunkleren, volleren Typen, für deren Herstellung mehr farbgebendes Chromoxid zugesetzt wird, und/oder höhere Kalziniertemperaturen verwendet werden. Hellere Typen, deren Herstellung auch meist bei etwas niedrigeren Temperaturen erfolgt, sind demgegenüber weniger abschreckempfindlich – aber immer noch so, daß gegenüber langsam abgekühlten Produkten ein Qualitätsunterschied sichtbar ist.

Die Untersuchung anderer Rutilmischphasenpigmente ergab überraschend, daß andere Rutilmischphasenpigmente, z.B. Nickel-Antimon-Rutil oder Chrom-Wolfram-Rutil gegen schnelles Abkühlen unempfindlich waren.

Die beschriebene Abschreckempfindlichkeit zeigt sich auch bei der Anwendung der Chrom-Antimon-Rutilmischphasenpigmenten zur Einfärbung von Kunststoffen, speziell solchen, die höhre Verarbeitungstemperaturen erfordern, wie z.B. Polyamid oder ABS-Kunststoffen. Werden nämlich solche Pigmente im Kunststoff bei der Verarbeitung auf Temperaturen oberhalb etwa 260°C erhitzt, so treten unerwünschte Verfärbungen auf.

Die Aufgabe der vorliegenden Erfindung ist es, Chrom-Antimon-Rutilmischphasenpigmente zur Verfügung zu stellen, deren Farbeigenschaften sich nicht durch rasches Abkühlen verschlechtern, d.h. keine Abschreckempfindlichkeit aufweisen sollten.

Es wurde nun gefunden, daß diese Forderung erfüllt wird durch Chrom-Antimon-Rutilmischphasenpigmente mit einem Gehalt von 0,01 bis 0,25%, bevorzugt von 0,04 bis 0,1 Gew.-%, an Lithium. Diese Chrom-Antimon-Rutilmischphasenpigmente sind Gegenstand dieser Erfindung.

Es muß als überraschend gewertet werden, daß gerade so gering dotierte Chrom-Antimon-Rutilmischphasenpigmente die gewünschten Eigenschaften aufweisen. Die enthaltene Menge an Lithium ist nämlich kritisch zu sehen. Während Mineralisatoren wie z.B. Lithiumfluorid, Natriumfluorid usw. im allgemeinen im Bereich von mehreren bis viele Prozente zugesetzt werden, ist die Wirksamkeit der Lithiumzugabe auf sehr geringe Mengen begrenzt. Als günstiger Bereich hat sich ein Gehalt von 0,01 bis 0,25% Lithium bezogen auf die Summe der Oxide $TiO_2$, $Cr_2O_3$, $Sb_2O_5$ bewährt. Lithiumzusätze oberhalb dieses Bereichs führen statt zu der gewünschten Unempfindlichkeit gegen Abschrecken, zu stark versinterten, dunklen und koloristisch unansehnlichen Produkten.

Werden andere, als Mineralisatoren beschriebene Verbindungen, zugesetzt, z.B. Natriumfluorid, Natriumchlorid, Kaliumchlorid, Calciumfluorid oder Calciumchlorid, so bleibt die Abschreckempfindlichkeit der Pigmente erhalten.

Gegenstand dieser Erfindung ist auch ein Verfahren zur Herstellung der erfindungsgemäßen Chrom-Antimon-Rutilphasenpigmente.

Dieses Verfahren ist dadurch gekennzeichnet, daß eine der Zusammensetzung der Chrom-Antimon-Rutilmischphasenpigmente entsprechenden Rohstoffmischung vor der Kalzinierung eine oder mehrere Lithiumverbindungen in solchen Mengen zudosiert werden, daß nach Kalzinierung 0,01 bis 0,25 Gew.-% Lithium, bevorzugt 0,04 bis 0,1 Gew.-%, im Chrom-Antimon-Rutilmischphasenpigment vorliegen.

Das gebildete Chrom-Antimon-Rutilpigment enthält nach der Kalcinierung Lithiumionen als integralen Bestandteil im Kristallgitter eingebaut.

Als Lithiumverbindungen im Rahmen der Herstellung abschreckunempfindlicher Chrom-Antimon-Rutilmischphasenpigmente können folgende Substanzen beispielsweise Verwendung finden : Lithiumcarbonat, Lithiumfluorid, Lithiumchlorid, Lithiumoxid, Lithiumhydroxid, Lithiumsulfat, Lithiumnitrat, Lithiumphosphat, Lithiumantimonat, Lithiumtitanat. Aus praktischen Gründen werden bei trockenen Rohstoffmischungen Lithiumcarbonat, bei nassen Rohstoffmischungen Lithiumtitanat, wegen seiner Unlöslichkeit auch bei saurer Reaktion flüssigen Phase, bevorzugt.

Durch die erfindungsgemäße Lithium-Dotierung werden abschreckungsunempfindliche Pigmente erhalten, die besonders geeignet für die Verwendung in Kunststoffen sind. Gegenstand dieser Erfindung ist somit die Verwendung der erfindungsgemäßen Chrom-Antimon-Rutilmischphasenpigmente zur Einfärbung von Kunststoffen. Die Abschreckunempfindlichkeit der Pigmente bietet natürlich auch Vorteile beim Herstellungsprozeß, so beim Austrag des kalzinierten heißen Pigment aus dem Kalzinierofen.

Im folgenden wird die Erfindung beispielhaft erläutert, ohne daß hierin eine Einschränkung zu sehen ist.

Beispiel 1

800 kg $TiO_2$ als wäßrige, schwefelsaure Hydratsuspension incl. Rutilkeimen werden mit 40 kg $Cr_2O_3$ und

3

100 kg $Sb_2O_3$ versetzt und intensiv vermischt. Zu dieser Mischung werden 10 kg $Li_2TiO_3$ = 0,1% Li, bezogen auf den Oxidgehalt der Rohmischung, hinzugegeben und nochmals homogenisiert. Die Suspension wird auf ca. 50% eingedickt und in einem direkt beheizten Drehrohr bei ca. 1000°C kalziniert. Nach dem Glühen fällt der heiße Ofenklinker in einen mit Wasser gefüllten Rührkessel, von wo aus die Suspension auf die Naßaufarbeitungsstraße aufgegeben wird. Nach der Aufarbeitung wird ein leuchtend orange/ocker farbenes Pigment erhalten.

### Beispiel 2

Man verfährt wie bei Beispiel 1, wobei jedoch die Menge des $Li_2TiO_3$ auf 4 kg = 0,05% Li reduziert wird. Nach der Aufarbeitung wird ebenfalls ein leuchtend orange/ocker farbenes Pigment erhalten.

### Beispiel 3

Verfährt man wie bei Beispielen 1 und 2, erhöht jedoch die Menge des $Li_2TiO_3$ auf 40 kg = 0,5% Li erhält man stark versinterte unansehnliche Produkte, die sich kaum noch zu Pigmenten aufarbeiten lassen.

### Beispiel 4

Verfährt man wie bei Beispiel 1 beschrieben, jedoch ohne Li-Verbindungen zuzusetzen, erhält man nach der Aufarbeitung schmutzig grünlich-graue Produkte.

### Beispiel 5

Verfährt man wie bei Beispiel 1 ohne jedoch Li-Verbindungen zuzusetzen und läßt die Produkte anstelle in Wasser abzuschrecken in einer Abkühlzone langsam abkühlen, erhält man nach der Aufarbeitung leuchtend orange/ocker farbene Pigmente.

### Beispiel 6

Wie Beispiel 1, nur daß anstelle Ti-2-Hydrolysat Anatas eingesetzt, $Li_2TiO_3$ durch die entsprechende Menge $Li_2CO_3$ ersetzt und die Mischung trocken erstellt wird.

### Beispiel 7

Werden erfindungsgemäße Li-dotierte Chrom-Antimon-Rutilpigmente nach Beispiel 1, 2 und 6 in Polyamid bzw. ABS-Kunststoffe eingearbeitet, wobei die Verarbeitungstemperaturen von 230°C bis 300°C in Intervallen geändert werden, so erhält man nach der farbmetrischen Auswertung Farbunterschiede zwischen Null-Probe (230°C) und Endprobe (300°C) von ca. 1 $\Delta E$ Einheit (gemessen nach dem CIELAB-System).

### Beispiel 8

Verfährt man wie bei Beispiel 7 mit Pigmenten, die nicht mit Li dotiert sind und langsam abgekühlt wurden (Beispiel 5), so erhält man nach der farbmetrischen Auswertung in ABS und Polyamid System Farbunterschiede zwischen Null-Probe (230°C) und Endprobe (300°C) Farbabweichung von 10 $\Delta E$ Einheiten.

## Ansprüche

1. Chrom-Antimon-Rutilmischphasenpigmente mit einem Gehalt von 0,01 bis 0,25% Gew.-%, bevorzugt von 0,04 bis 0,1 Gew.-%, an Lithium.

2. Verfahren zur Herstellung der Chrom-Antimon-Rutilmischphasenpigmente gemäß Anspruch 1, dadurch gekennzeichnet, daß eine der Zusammensetzung der Chrom-Antimon-Rutilmischphasenpigmente entsprechende Rohstoffmischung vor der Kalzinierung eine oder mehrere Lithiumverbindungen in solchen Mengen zudosiert werden, daß nach Kalzinierung 0,01 bis 0,25 Gew.-% Lithium, bevorzugt 0,04 bis 0,1 Gew.-%, im Chrom-Antimon-Rutilmischphasenpigment vorliegen.

3. Verwendung der Chrom-Antimon-Rutilmischphasenpigmente gemäß einem der Ansprüche 1 oder 2 zur Einfärbung von Kunststoffen.

## Claims

1. Chromium-antimony rutile mixed-phase pigments containing 0.01 to 0.25% by weight and preferably 0.04 to 0.1% by weight lithium.

2. A process for the production of the chromium-antimony rutile mixed-phase pigments claimed in claim 1, characterized in that, before calcination, one or more lithium compounds is/are added to a mixture of raw materials corresponding to the composition of the chromium-antimony rutile mixed-phase pigments in such quantities that, after calcination, 0.01 to 0.25% by weight and preferably 0.04 to 0.1% by weight lithium is present in the chromium-antimony rutile mixed-phase pigment.

3. The use of the chromium-antimony rutile mixed-phase pigments claimed in claim 1 or 2 for pigmenting plastics.

## Revendications

1. Pigments composites chrome-antimoine-rutile ayant une teneur en lithium de 0,01 à 0,25% en poids, de préférence de 0,04 à 0,1% en poids.

2. Procédé pour la fabrication des pigments composites chrome-antimoine-rutile selon la revendication 1, caractérisé en ce que l'on dose avant la calcination, dans un mélange de matières premières correspondant à la composition des pigments composites chrome-antimoine-rutile, un ou plusieurs composés de lithium en quantités telles que le pigment composite chrome-antimoine-rutile contienne après calcination 0,01 à 0,25% en poids de lithium, de préférence 0,04 à 0,1% en poids.

3. Utilisation des pigments composites chrome-antimoine-rutile selon la revendication 1 ou 2 pour la teinture de matières plastiques.